# FASCICULE DE BREVET EUROPEEN

(11) **EP 2 720 104 B1**
(45) Date de publication et mention de la délivrance du brevet: **01.04.2015**
(21) Numéro de dépôt: 12290340.4
(22) Date de dépôt: 12.10.2012
(51) Int. Cl.: G05D 16/10, F16K 31/122

(54) **Ensemble vanne autorégulée à géométrie compacte**
Selbstregulierender Ventilblock mit kompakter Geometrie
Self-regulating valve assembly with compact geometry

(43) Date de publication de la demande: 16.04.2014
(73) Titulaire: Siemens Schweiz AG, 8047 Zürich (CH)
(72) Inventeur: Beucher, Stéphane, 78430 Louveciennes (FR); Degraeve, Jérémy, 92360 Meudon la Forêt (FR); Weugue, William, 78250 Gaillon sur Montcient (FR); Magori, Erhard, 85622 Feldkirchen (DE)
(74) Mandataire: Maier, Daniel Oliver

(56) Documents cités:
- WO-A1-94/17857
- WO-A1-2006/108931
- KR-A- 20110 027 883
- US-A- 4 516 600

## Description

La présente invention concerne un ensemble vanne autorégulée selon le préambule de la revendication 1.

Il est connu qu'un ensemble de vanne autorégulée a été présenté et décrit par la publication WO2006/108931A1. Principalement et schématiquement selon la figure 1 de la présente invention, cet ensemble vanne autorégulée 1 comprend :
- un corps de vanne 2 qui, en partie inférieure, a une section d'entrée 6 pour une connexion à un réservoir 3 destiné à contenir un fluide F sous pression et, en partie supérieure, une sortie 4 pour le raccordement à un système de tuyauterie,
- un piston 26 mobile dans le corps de vanne 2 le long d'un premier axe 7 entre une position ouverte permettant la communication de fluide entre la section d'entrée 6 et la sortie 4, et une position fermée interrompant ladite communication de fluide, le piston 26 ayant une section d'extrémité supérieure 34, et une section d'obturation inférieure 42,
- un module de type ressort 28 couplé au piston 26 et au corps de vanne 2 et interagissant dynamiquement avec le piston au moins après un déclenchement Act de la vanne et durant tout un cycle d'autorégulation de la vanne imposant un positionnement du piston entre sa position ouverte et fermée permettant la communication de fluide entre la section d'entrée 6 et la sortie 4 sous une pression de sortie contrôlée.

Un tel ensemble vanne autorégulée est ainsi actuellement livré avec un chapeau de réservoir qui doit contenir tous ces éléments qui permet de protéger le corps de vanne et des composantes couplées, particulièrement en cas de chute et enfin afin de s'aligner sur des normes sécuritaires de type ISO. A l'heure actuelle, un tel chapeau est réalisé sur mesure et ses dimensions, du moins sa hauteur interne, excède environ 155mm. Ainsi, il n'est toujours pas possible de prévoir un chapeau de type standard tel que par exemple pour des réservoirs usuels type gaz comprimés. Le coût du chapeau est donc actuellement assez élevé, car nécessite aussi plus de matériau pour le fabriquer.

De plus, l'ensemble vanne autorégulée présenté dans WO2006/108931A1 comporte une phase d'activation après déclenchement d'environ 2s, ce qui est fort bref, mais dans l'idéal, il serait meilleur de minimiser cette durée.

Enfin, toujours selon l'exemple présenté dans WO2006/108931A1, en phase d'autorégulation, l'ensemble vanne permet avantageusement d'obtenir une pression de sortie contrôlée à 50bar pendant au moins environ 35s, puis durant encore environ 25s, cette pression contrôlée diminue lentement vers environ 20bar. Idéalement, il est souhaité de maximiser la durée de maintien constant en pression de sortie contrôlée sur au moins la durée complète de 60s. Il est aussi permis de sensiblement diminuer cette pression constante en-dessous de 50bar.

Un but de la présente invention est ainsi de présenter un ensemble vanne autorégulée présentant une géométrie plus compacte afin que l'ensemble vanne disposé sur un réservoir tel que décrit ci-dessus puisse être recouvert d'un chapeau standard, en particulier d'une hauteur interne égale ou inférieure à 155mm.

Enfin, l'ensemble vanne autorégulée selon l'invention devrait idéalement présenter des caractéristiques de pression de sortie contrôlée sur un intervalle de temps donné se rapprochant des critères idéaux tels que décrits en partie introductive du document.

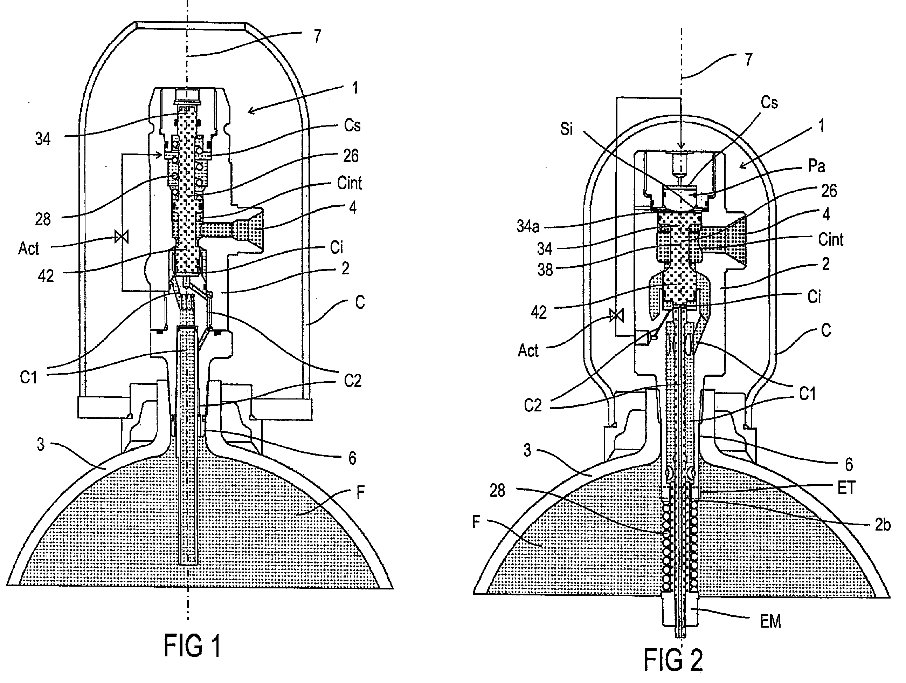

A cet effet, un ensemble vanne autorégulée comprenant une vanne autorégulée enfichable sur un réservoir contenant un fluide (liquide/gaz) sous haute pression, par exemple un agent extincteur sous 300bar, est ainsi proposé au travers des caractéristiques de la revendication 1. Cet ensemble est de dimension inférieure à celui de la figure 1 et présente sous des formes de réalisation préférentielles des caractéristiques optimisées de pression de sortie contrôlée sur un intervalle de temps.

Un ensemble de sous-revendications présente également des avantages de l'invention.

Un exemple de réalisation de l'ensemble vanne autorégulé selon l'invention est fourni à l'aide de la figure 2.

Analogiquement à la figure 1 et conformément au mode de fonctionnement de l'ensemble vanne (ou valve) décrit dans WO2006/108931A1, l'ensemble vanne selon l'invention (figure 2) obéit principalement aux mêmes règles fonctionnelles. Pour des raisons de clarté sur les différentes phases de fonctionnalité de l'ensemble vanne (déclenchement, activation, autorégulation, finale), il est donc fait référence au descriptif de modes/phases de fonctionnement du document WO2006/108931A1 ainsi que des figures 4 à 8, en particulier pour comprendre l'obtention d'un régime en autorégulation de l'ensemble vanne.

En effet, figure 1 et figure 2 montrent une illustration schématique en coupe de deux versions d'un ensemble vanne 1. Les illustrations représentent différentes caractéristiques de l'ensemble vanne 1 pour un exemple d'utilisation en relation avec un système de sécurité anti-incendie. Dans ces versions du système de sécurité anti-incendie, l'ensemble vanne 1 est connecté (section d'entrée 6) à un réservoir 3 de fluide et à un système de tuyauterie (couplé à la sortie 4, mais non représenté dans les présentes figures) configuré pour distribuer du fluide F à un ou plusieurs sites, par exemple des locaux à l'intérieur d'un bâtiment. Le réservoir 3 peut être une bouteille cylindrique métallique à paroi forte contenant le fluide à une pression comprise entre 200 bars et 500 bars environ, par exemple 300 bars. Le fluide F peut être un agent qui supprime et/ou éteint le feu. Par exemple, le fluide peut inclure un gaz inerte (tel que azote, argon) ou un mélange de deux ou plusieurs gaz inertes, ou tout autre fluide ayant des propriétés d'extinction ou suppression du feu.

En service, par exemple dans la détection de chaleur, fumée ou feu excessifs, l'ensemble vanne 1 est activé pour émettre le fluide F dans un temps prédéterminé, à une pression sensiblement constante et inférieure à la pression de fluide dans la bouteille 3. L'ensemble vanne 1 peut débiter le fluide F à une pression sensiblement constante comprise entre 10 et 100 bars environ en une ou plusieurs minutes environ. Dans une version selon l'invention, l'ensemble vanne 1 débite avantageusement le fluide à une pression sensiblement constante d'environ 40 bars en 40-50 secondes, et décrit ci-après de façon plus détaillée. Les spécialistes en ce domaine apprécieront le fait que l'ensemble vanne 1 peut être utilisé non seulement en relation avec un système de sécurité anti-incendie, mais aussi dans tout autre système où un fluide à haute pression doit être débité à une pression plus basse que celle du réservoir 3 et sensiblement constante dans un temps prédéterminé.

Aux fins d'illustration des parties communes des figures 1 et 2 et dans les passages qui suivent, l'ensemble vanne 1, connecté à la bouteille 3, est représenté en coupe verticalement selon un de ses diamètres et son axe de révolution 7 et comporte un corps de vanne 2. Les représentations en coupe des figures 1 et 2 ne comportent pas de hachures afin de ne pas surcharger les représentations. Les figures 1 et 2 sont sensiblement à la même échelle, de façon à mettre en évidence que l'ensemble vanne de la figure 2 peut être recouvert d'un chapeau C de dimension fort réduite par rapport à un chapeau C qui recouvre l'ensemble vanne de la figure 1. Seule la position fermée de l'ensemble est représentée dans les deux figures 1 et 2, mais comme précédemment évoqué, les phases fonctionnelles de déclenchement puis d'ouverture sont similaires à celle du document WO2006/108931A1. Le corps de vanne 2 a une forme généralement oblongue, avec une section inférieure et une section supérieure opposées. Dans toute la description du présent document, les termes relationnels tels que "inférieur", "supérieur", "au-dessous", "en bas" ou similaires sont utilisés sans limitation pour désigner des particularités de l'ensemble vanne 1, cet ensemble vanne 1 étant vu debout ou en position sensiblement verticale. Cependant, il est entendu dans les milieux spécialisés en ce domaine que de tels termes s'appliquent également lorsque l'ensemble vanne 1 est placé dans une autre orientation. La partie inférieure du corps de vanne 2 comporte un filetage extérieur permettant ainsi en service un vissage de l'ensemble vanne 1 sur la bouteille 3, ledit vissage étant exempt de toute fuite de pression vers l'extérieur de la bouteille 3.

Toujours en commun avec les figures 1 et 2, un organe d'actionnement de l'ensemble vanne est effectué par un déclenchement Act situé sur un côté du corps de valve 2, et peut être déclenché par un signal émanant d'un poste central ou d'un système de détecteur d'incendie qui active un mécanisme de déclenchement (par ex., pneumatique, électrique ou mécanique) appliquant une force sur l'organe d'actionnement et initiant ainsi la phase d'activation de l'ensemble vanne.

Durant la phase d'activation, des canaux C2 dits de pression statique établissent un équilibre de pression entre le réservoir 3, une chambre inférieure Ci de corps de vanne 2 et une chambre supérieure Cs de corps de vanne 2. Cet équilibrage de pression statique a pour effet de libérer le piston 26 de sa position fermée en ce que la section inférieure d'obturation 42 se déplace sensiblement vers la partie inférieure de corps de vanne dans ladite chambre inférieure Ci. Egalement sous cette phase d'activation, la pression en sortie 4 de corps de vanne 2 doit s'établir au plus vite jusqu'au niveau constant souhaité (par exemple 40bar) afin de libérer le fluide F hors de l'ensemble vanne. Cet établissement en pression est atteint par une mise en équilibre de pression dynamique entre le réservoir 3 et la sortie 4 via des canaux C1 dits de pression dynamique et une chambre intermédiaire Cint du corps de vanne 2 aboutissant sur la sortie 4. La chambre intermédiaire Cint se situe entre la chambre supérieure Cs et la chambre inférieure Ci du corps de vanne. Une partie cylindrique de corps de piston 26 traverse la chambre intermédiaire Cint et présente localement une section à diamètre minimal qui lors de l'établissement de pression dynamique (dit aussi phase d'autorégulation) est maintenue à une distance requise d'une section en anneau de butée intégrée au corps de vanne afin de laisser passer le fluide F sous les conditions d'autorégulation imposées entre la section à diamètre minimal du piston 26 et la section en anneau de butée du corps de vanne 2. Durant ces phases d'activation et d'autorégulation, le module de type ressort 28 permet un maintien mécaniquement élastique en position du piston 26 dans le corps de vanne 2 complémentairement à l'équilibrage en pression statique et dynamique. Au moins jusqu'à ce stade de fonctionnement impliquant les caractéristiques ci-dessus, les ensembles vanne selon figures 1 et 2 peuvent être décrits de façon analogue.

Figure 2 présente ainsi schématiquement un ensemble vanne 1 autorégulée selon l'invention comportant:
- un corps de vanne 2 qui, en partie inférieure, a une section d'entrée 6 pour une connexion à un réservoir 3 destiné à contenir un fluide F sous pression et, en partie supérieure, une sortie 4 pour le raccordement à un système de tuyauterie,
- un piston 26 mobile dans le corps de vanne 2 le long d'un premier axe 7 entre une position ouverte permettant la communication de fluide entre la section d'entrée 6 et la sortie 4, et une position fermée interrompant ladite communication de fluide, le piston 26 ayant une section d'extrémité supérieure 34, et une section d'obturation inférieure 42,
- un module de type ressort 28 couplé au piston 26 et au corps de vanne 2 et interagissant dynamiquement avec le piston au moins après un déclenchement (Act) de la vanne et durant tout un cycle d'autorégulation de la vanne imposant un positionnement du piston entre sa position ouverte et fermée permettant la communication de fluide entre la section d'entrée 6 et la sortie 4 sous une pression de sortie contrôlée.

Toutes ces caractéristiques sont également présentes en figure 1 selon l'état de la technique WO2006/108931A1. A la différence de cet état de l'art, l'ensemble vanne autorégulée selon l'invention prévoit que le module de type ressort 28 est disposé sous la section d'obturation inférieure 42 du piston.

De façon préférentielle, l'ensemble vanne selon l'invention prévoit que le module de type ressort 28 est insérable dans le réservoir 3. En effet, le module de type ressort 28 est disposé en partie inférieure du corps de vanne 2 sous la chambre inférieure Ci, ladite partie inférieure du corps de vanne étant elle-même au moins partiellement insérable dans la connexion au réservoir 3 afin de plonger dans le fluide F. Comparativement à WO2006/108931A1 selon figure 1, le module de type ressort 28 selon figure 2 n'est ainsi plus logé à l'intérieur de la chambre supérieure Cs du corps de vanne 2 alors qu'il était configuré pour exercer une force de rappel sur le piston, afin de le ramener à la position ouverte. De ce fait, la chambre supérieure Cs selon figure 2 ne contenant plus le module de type ressort, elle peut être considérablement réduite en taille par rapport à celle de figure 1. En conséquence, le corps de vanne 2 et donc l'ensemble vanne autorégulée est aussi fort avantageusement miniaturisé afin de pouvoir être recouvert d'un chapeau C plus petit.

L'ensemble vanne selon l'invention prévoit aussi que le piston 26 comprend sous sa section d'obturation inférieure 42 une prolongation de piston sous forme d'une partie complémentaire cylindrique insérable dans le réservoir 3 et mobile dans la partie inférieure de vanne. De la sorte, le module tel qu'un ressort cylindrique peut être enfilé sur cette partie complémentaire disposée/insérable dans le réservoir 3 au travers de la connexion 6. Par rapport à la figure 1, ceci a pour avantage que l'espace qui était réservé pour disposer le ressort dans une chambre en partie supérieure de piston ou de corps de vanne peut être réduit de manière conséquente, puisque cet espace est dorénavant selon figure 2 transposé dans le réservoir 3. Ainsi, les dimensions de la partie supérieure de corps de vanne 2 ainsi que de la chambre supérieure Cs de pression associée peuvent être également réduites, ce qui implique que le chapeau C peut être enfin aussi réduit en taille.

Afin de pouvoir maintenir le module de type ressort 28 le long de la partie complémentaire cylindrique insérable dans le réservoir 3, ledit module de type ressort présente deux extrémités étant maintenues respectivement entre un bord 2b de partie inférieure de corps de vanne et un élément mobile de retenue EM dont la position par rapport au dit bord 2b est préférentiellement variable par translation le long du premier axe 7, notamment au moyen d'un élément mobile de type écrou positionnable sur un axe fileté accouplé au piston. Ce type de maintien à écart variable permet ainsi de flexiblement tarer le ressort sous les conditions requises des phases de fonctionnement de l'ensemble vanne. A cet effet, l'écrou peut être soit l'élément de retenue EM soit alternativement ou complémentairement un écrou de tarage ET dont un bord forme le bord 2b de partie inférieure de corps de vanne. Dans le cas d'un écrou de tarage ET formant le bord 2b ainsi mobile, il est envisageable de disposer un mécanisme de réglage en vissage du dit écrou par un système engrené ou de poussée interne au corps de vanne et donc le régleur est disposé en partie externe de la connexion au réservoir 3, de sorte que le tarage puisse être réalisé par un opérateur alors que le réservoir en pression et le corps de vanne sont solidairement couplés. Des moyens de mesure de pression tels que des manomètres peuvent être disposés hors du réservoir et du corps de vanne, mais ne sont pas représentés dans les figures pour des raisons de clarté.

Egalement, l'ensemble vanne selon l'invention en figure 2 prévoit que le corps de vanne 2 présente, en partie supérieure, une chambre supérieure Cs de pression statique sous laquelle est disposé un piston auxiliaire Pa, le dit piston auxiliaire présentant une surface inférieure incurvée Si pour garantir un contact à surface réduite avec un bord supérieur 34a de la section d'extrémité supérieure 34 du piston. Ce piston auxiliaire remplace pour ainsi dire la partie supérieure du piston 28 de la figure 1. En d'autres termes, le piston de la figure 1 a été dorénavant scindé en deux blocs de piston coulissant dans le corps de vanne 2. De ce fait, la partie principale de piston 26 disposée sous le piston auxiliaire ne présente au plus que deux génératrices de guidage circulaire contre le corps de vanne 2. A la figure 1, le piston possédait trois génératrices de guidage circulaire contre le corps de vanne 2. L'avantage technique obtenu est de réduire voir supprimer un hyperstatisme du piston mobile dans le corps de vanne 2.

L'ensemble vanne selon l'invention en figure 2 prévoit également que le corps de vanne 2 présente une chambre inférieure Ci de pression statique sous un bord inférieur de la section d'obturation 42 du piston 26, ladite chambre inférieure étant mise, par activation de la vanne, en équilibre de pression avec la dite chambre supérieure Cs de pression statique possédant un volume de préférence minimal. Cette chambre supérieure étant de volume dorénavant minimal, il est plus rapide et simple de la mettre en pression avec la chambre inférieure, ce qui permet de raccourcir la durée de la phase d'activation de l'ensemble vanne. L'autorégulation souhaitée est donc atteinte plus rapidement.

L'ensemble vanne selon l'invention présente une section médiane 38 du piston 26 située entre la section d'extrémité 34 et la section d'obturation 42 et étant disposée dans une chambre intermédiaire Cint de pression dynamique du corps de vanne dont le volume est supérieur aux volumes des chambres supérieures et inférieures de pression statique, notamment sous un rapport d'au moins 3:1. Ce rapport entre volumes des chambres est un critère de dimensionnement du corps de vanne 2 à prendre en compte lors de la miniaturisation du dit corps afin que les conditions requises des phases d'activation et d'autorégulation soient optimalement atteintes sous une durée et une pression contrôlée de sortie. Avec un tel critère, il est possible d'obtenir en sortie 4 un intervalle de pression tel que situé entre 30 et 60 bar, idéalement proche de 40bar, sous une durée de 40 à 60s à pression stabilisée.

Dans le même but que précédemment, l'ensemble vanne selon l'invention prévoit que la chambre intermédiaire Cint de pression dynamique est couplée à la connexion du réservoir 3 par des premiers canaux C1 et que les chambres supérieures Cs et inférieures Ci de pression statique sont couplées à la connexion du réservoir 3 par des deuxièmes canaux C2, les premiers canaux C1 présentant un diamètre plus élevé que les deuxièmes canaux C2, notamment sous un rapport d'au moins 5:1. Ici encore, ce dimensionnement sous une forme de corps de vanne miniaturisée permet d'atteindre des conditions d'activation et d'autorégulation optimales selon les résultats donnés ci-dessus.

Finalement, l'ensemble vanne selon l'invention a permis de réaliser un corps de vanne hors du réservoir 3 présente le long du premier axe 7 une hauteur inférieure à 125mm et transversalement audit axe un diamètre inférieur à 83mm.

## Revendications

1. Un ensemble vanne (1) autorégulée comportant:
- un corps de vanne (2) qui, en partie inférieure, a une section d'entrée (6) pour une connexion à un réservoir (3) destiné à contenir un fluide (F) sous pression et, en partie supérieure, une sortie (4) pour le raccordement à un système de tuyauterie,
- un piston (26) mobile dans le corps de vanne (2) le long d'un premier axe (7) entre une position ouverte permettant la communication de fluide entre la section d'entrée (6) et la sortie (4), et une position fermée interrompant ladite communication de fluide, le piston (26) ayant une section d'extrémité supérieure (34), et une section d'obturation inférieure (42),
- un module de type ressort (28) couplé au piston (26) et au corps de vanne (2) et interagissant dynamiquement avec le piston au moins après un déclenchement (Act) de la vanne et durant tout un cycle d'autorégulation de la vanne imposant un positionnement du piston entre sa position ouverte et fermée permettant la communication de fluide entre la section d'entrée (6) et la sortie (4) sous une pression de sortie contrôlée,
**caractérisé en ce que** le module de type ressort (28) est disposé sous la section d'obturation inférieure (42) du piston.

2. L'ensemble vanne selon revendication 1, pour lequel le module de type ressort (28) est insérable dans le réservoir (3).

3. L'ensemble vanne selon revendication 2, pour lequel le module de type ressort (28) est disposé en partie inférieure du corps de vanne, ladite partie inférieure du corps de vanne étant elle-même au moins partiellement insérable dans la connexion au réservoir (3).

4. L'ensemble vanne selon revendication 3, pour lequel le piston (26) comprend sous sa section d'obturation inférieure (42) une partie complémentaire cylindrique insérable dans le réservoir (3) et mobile dans la partie inférieure de vanne.

5. L'ensemble vanne selon revendication 2, pour lequel le module de type ressort (28) présente deux extrémités étant maintenues respectivement entre un bord (2b) de partie inférieure de corps de vanne et un élément mobile de retenue (EM) dont la position par rapport au dit bord (2b) est variable par translation le long du premier axe (7), notamment au moyen d'un élément mobile de type écrou positionnable sur un axe fileté accouplé au piston.

6. L'ensemble vanne selon revendication 5, pour lequel l'écrou est soit l'élément de retenue (EM) soit alternativement ou complémentairement un écrou de tarage (ET) dont un bord forme le bord (2b) de partie inférieure de corps de vanne.

7. L'ensemble vanne selon une des revendications précédentes, pour lequel le corps de vanne présente, en partie supérieure, une chambre supérieure (Cs) de pression statique sous laquelle est disposé un piston auxiliaire (Pa), le dit piston auxiliaire présentant une surface inférieure incurvée (Si) pour garantir un contact à surface réduite avec un bord supérieur (34a) de la section d'extrémité supérieure (34) du piston.

8. L'ensemble vanne selon la revendication 7, pour lequel le corps de vanne présente une chambre inférieure (Ci) de pression statique sous un bord inférieur de la section d'obturation (42) du piston (26), ladite chambre inférieure étant mise, par activation de la vanne, en équilibre de pression avec la dite chambre supérieure de pression statique possédant un volume de préférence minimal.

9. L'ensemble vanne selon revendication 7 ou 8, pour lequel le piston (26) présente au plus deux génératrices de guidage circulaire contre le corps de vanne (2).

10. L'ensemble vanne selon les revendications précédentes 7 et 8, pour lequel une section médiane (38) du piston (26) située entre la section d'extrémité (34) et la section d'obturation (42) est disposée dans une chambre intermédiaire (Cint) de pression dynamique du corps de vanne dont le volume est supérieur aux volumes des chambres supérieures et inférieures de pression statique, notamment sous un rapport d'au moins 3:1.

11. L'ensemble vanne selon revendication 10, pour lequel :
- la chambre intermédiaire de pression dynamique est couplée à la connexion du réservoir (3) par des premiers canaux (C1) ;
- et les chambres supérieures et inférieures de pression statique sont couplées à la connexion du réservoir (3) par des deuxièmes canaux (C2) ;
- les premiers canaux (C1) présentant un diamètre plus élevé que les deuxièmes canaux (C2), notamment sous un rapport d'au moins 5:1.

12. L'ensemble vanne selon une des revendications précédentes, pour lequel le corps de vanne hors du réservoir (3) présente le long du premier axe (7) une hauteur inférieure à 125mm et transversalement audit axe un diamètre inférieur à 83mm.

## Patentansprüche

1. Selbstregulierende Ventilanordnung (1), welche aufweist:
- einen Ventilkörper (2), der im unteren Teil einen Eingangsabschnitt (6) für eine Verbindung mit einem Behälter (3), der dazu bestimmt ist, ein unter Druck stehendes Fluid (F) zu enthalten, und im oberen Teil einen Ausgang (4) für den Anschluss an ein Rohrleitungssystem aufweist,
- einen Kolben (26), der in dem Ventilkörper (2) entlang einer ersten Achse (7) zwischen einer offenen Position, welche die Fluidverbindung zwischen dem Eingangsabschnitt (6) und dem Ausgang (4) ermöglicht, und einer geschlossenen Position, welche diese Fluidverbindung unterbricht, beweglich ist, wobei der Kolben (26) einen oberen Endabschnitt (34) und einen unteren Absperrabschnitt (42) aufweist,
- ein Modul vom Typ einer Feder (28), das mit dem Kolben (26) und mit dem Ventilkörper (2) gekoppelt ist und mit dem Kolben wenigstens nach einer Auslösung (Act) des Ventils und während eines gesamten Selbstregulationszyklus des Ventils dynamisch interagiert und eine Positionierung des Kolbens zwischen seiner offenen und seiner geschlossenen Position herbeiführt, welche die Fluidverbindung zwischen dem Eingangsabschnitt (6) und dem Ausgang (4) unter einem kontrollierten Ausgangsdruck ermöglicht,
**dadurch gekennzeichnet, dass** das Modul vom Typ einer Feder (28) unter dem unteren Absperrabschnitt (42) des Kolbens angeordnet ist.

2. Ventilanordnung nach Anspruch 1, wobei das Modul vom Typ einer Feder (28) in den Behälter (3) einsetzbar ist.

3. Ventilanordnung nach Anspruch 2, wobei das Modul vom Typ einer Feder (28) im unteren Teil des Ventilkörpers angeordnet ist, wobei dieser untere Teil des Ventilkörpers seinerseits wenigstens teilweise in die Verbindung zum Behälter (3) einsetzbar ist.

4. Ventilanordnung nach Anspruch 3, wobei der Kolben (26) unter seinem unteren Absperrabschnitt (42) einen zylindrischen komplementären Teil aufweist, der in den Behälter (3) einsetzbar und im unteren Teil des Ventils beweglich ist.

5. Ventilanordnung nach Anspruch 2, wobei das Modul vom Typ einer Feder (28) zwei Enden aufweist, die jeweils zwischen einem Rand (2b) des unteren Teils des Ventilkörpers und einem beweglichen Halteelement (EM) gehalten werden, dessen Position bezüglich des Randes (2b) durch Translation entlang der ersten Achse (7) veränderlich ist, insbesondere mittels eines beweglichen Elements vom Typ einer Mutter, die auf einem mit dem Kolben gekoppelten Gewindebolzen positionierbar ist.

6. Ventilanordnung nach Anspruch 5, wobei die Mutter entweder das Halteelement (EM) oder alternativ oder ergänzend dazu eine Einstellmutter (ET) ist, von der ein Rand den Rand (2b) des unteren Teils des Ventilkörpers bildet.

7. Ventilanordnung nach einem der vorhergehenden Ansprüche, wobei der Ventilkörper im oberen Teil eine obere statische Druckkammer (Cs) aufweist, unter welcher ein Hilfskolben (Pa) angeordnet ist, wobei dieser Hilfskolben eine gekrümmte Unterseite (Si) aufweist, um einen Kontakt auf verminderter Fläche mit einem oberen Rand (34a) des oberen Endabschnitts (34) des Kolbens zu garantieren.

8. Ventilanordnung nach Anspruch 7, wobei der Ventilkörper eine untere statische Druckkammer (Ci) unter einem unteren Rand des Absperrabschnitts (42) des Kolbens (26) aufweist, wobei die untere Kammer durch Aktivierung des Ventils in ein Druckgleichgewicht mit der oberen statischen Druckkammer gebracht wird, die ein vorzugsweise minimales Volumen aufweist.

9. Ventilanordnung nach Anspruch 7 oder 8, wobei der Kolben (26) höchstens zwei Erzeugende der kreisförmigen Führung am Ventilkörper (2) aufweist.

10. Ventilanordnung nach den vorhergehenden Ansprüchen 7 und 8, wobei ein mittlerer Abschnitt (38) des Kolbens (26), der sich zwischen dem Endabschnitt (34) und dem Absperrabschnitt (42) befindet, in einer dazwischenliegenden dynamischen Druckkammer (Cint) des Ventilkörpers angeordnet ist, deren Volumen größer als die Volumina der oberen und der unteren statischen Druckkammer ist, insbesondere in einem Verhältnis von mindestens 3:1.

11. Ventilanordnung nach Anspruch 10, wobei:
- die dazwischenliegende dynamische Druckkammer mit der Verbindung des Behälters (3) durch erste Kanäle (C1) gekoppelt ist;
- und die obere und die untere statische Druckkammer mit der Verbindung des Behälters (3) durch zweite Kanäle (C2) gekoppelt sind;
- die ersten Kanäle (C1) einen größeren Durchmesser als die zweiten Kanäle (C2) aufweisen, insbesondere in einem Verhältnis von mindestens 5:1.

12. Ventilanordnung nach einem der vorhergehenden Ansprüche, wobei der Ventilkörper außerhalb des Behälters (3) entlang der ersten Achse (7) eine Höhe von weniger als 125 mm und quer zu dieser Achse einen Durchmesser von weniger als 83 mm aufweist.

## Claims

1. Self-regulated valve assembly (1) comprising:
- a valve body (2) which, in the lower part, has an input section (6) for a connection to a tank (3) intended to contain a fluid (F) under pressure and, in the upper part, an output (4) for connection to a pipe system,
- a piston (26) movable in the valve body (2) along a first axis (7) between an open position enabling the fluid to communicate between the input section (6) and the output (4), and a closed position cutting off said fluid communication, the piston (26) having an upper end section (34) and a lower sealing section (42),
- a spring type module (28) coupled to the piston (26) and to the valve body (2) and interacting dynamically with the piston at least after an actuation (Act) of the valve and during the entire cycle of self-regulation of the valve, imposing a positioning of the piston between its open and closed position, allowing fluid communication between the input section (6) and the output (4) under a controlled output pressure,
**characterised in that** the spring type module (28) is positioned beneath the lower sealing section (42) of the piston.

2. Valve assembly according to claim 1, wherein the spring type module (28) can be inserted into the tank (3).

3. Valve assembly according to claim 2, for which the spring type module (28) is positioned in the lower part of the valve body, said lower part of the valve body itself being at least partially able to be inserted into the connection to the tank (3).

4. Valve assembly according to claim 3, for which the piston (26) includes, beneath its lower sealing section (42), an additional cylindrical part which can be inserted into the tank (3) and is movable in the lower part of the valve.

5. Valve assembly according to claim 2, for which the spring type module (28) exhibits two ends held respectively between an edge (2b) of the lower part of the valve body and a movable retaining element (EM), the position of which with respect to said edge (2b) is variable by translation along the first axis (7), in particular by means of a nut type movable element which can be positioned on a threaded axis coupled to the piston.

6. Valve assembly according to claim 5, for which the nut is either the retaining element (EM) or alternatively or complementarily an adjusting nut (AND), one edge of which forms the edge (2b) of the lower part of the valve body.

7. Valve assembly according to one of the preceding claims, for which the valve body exhibits, in the upper part, an upper static pressure chamber (Cs) beneath which there is an auxiliary piston (Pa), said auxiliary piston exhibiting a lower curved surface (Si) to guarantee reduced surface contact with an upper edge (34a) of the upper end section (34) of the piston.

8. Valve assembly according to claim 7, for which the valve body exhibits a lower static pressure chamber (Ci) beneath a lower edge of the sealing section (42) of the piston (26), said lower chamber being, through activation of the valve, balanced in pressure with said upper static pressure chamber preferably having a minimal volume.

9. Valve assembly according to claim 7 or 8, for which the piston (26) exhibits at most two circular guide generatrices against the valve body (2).

10. Valve assembly according to preceding claims 7 and 8, for which a middle section (38) of the piston (26) located between the end section (34) and the sealing section (42) is positioned in an intermediate dynamic pressure chamber (Cint) of the valve body, the volume of which is greater than the volumes of the upper and lower static pressure chambers, in particular in a ratio of at least 3:1.

11. Valve assembly according to claim 10, for which:
- the intermediate dynamic pressure chamber is coupled to the tank (3) connection by first channels (C1);
- and the upper and lower static pressure chambers are coupled to the tank (3) connection by second channels (C2);
- the first channels (C1) exhibiting a greater diameter than the second channels (C2), in particular in a ratio of at least 5:1.

12. Valve assembly according to one of the preceding claims, for which the valve body outside the tank (3) exhibits, along the first axis (7), a height of less than 125 mm and, transversally to said axis, a diameter of less than 83 mm.
